Europäisches Patentamt

European Patent Office

Office européen des brevets

(19)

(11) Numéro de publication : **0 443 904 A1**

(12) **DEMANDE DE BREVET EUROPEEN**

(21) Numéro de dépôt : **91400327.2**

(22) Date de dépôt : **11.02.91**

(51) Int. Cl.⁵ : **G21C 19/105**

(30) Priorité : **20.02.90 FR 9002046**

(43) Date de publication de la demande :
**28.08.91 Bulletin 91/35**

(84) Etats contractants désignés :
**BE DE GB IT**

(71) Demandeur : **FRAMATOME**
**Tour Fiat 1, Place de la Coupole**
**F-92400 Courbevoie (FR)**

(72) Inventeur : **Limouzin, Dominique**
**74 rue Cuvier**
**F-69006 Lyon (FR)**

(74) Mandataire : **Bouget, Lucien et al**
**Cabinet Lavoix 2, Place d'Estienne d'Orves**
**F-75441 Paris Cédex 09 (FR)**

(54) **Grappin de levage et de déplacement d'un objet entre une position immergée dans un liquide chaud tel qu'un métal et une position émergée dans un gaz.**

(57) Le grappin (1) comporte un corps tubulaire (2) relié à un moyen de levage et un coulisseau (3) monté mobile axialement dans le corps tubulaire (2), de manière à assurer la manoeuvre de doigts de préhension (20) portés par le corps tubulaire (2). Le corps tubulaire (2) comporte une partie d'extrémité ouverte (16) en forme de cloche à l'intérieur de laquelle le coulisseau (3) est relié à la surface interne du corps tubulaire, sur toute sa périphérie, par un organe élastique (30) déformable dans la direction axiale et étanche aux gaz. Les doigts de préhension (20) sont dispensés à l'intérieur de la partie d'extrémité (16) en forme de cloche de l'élément tubulaire, entre l'organe élastique (30) assurant sa fermeture et sont extrémité ouverte (16a). Lors de l'introduction de la partie inférieure du corps tubulaire (2) dans le métal liquide (8) pour assurer la prise et le déplacement d'un objet (15), du gaz est emprisonné à l'intérieur de la cloche (16) et constitue une réserve dans laquelle se trouvent les doigts de préhension (20) et leurs moyens de commande, pendant la prise et le déplacement de l'objet (15) sous le niveau (8a) du métal liquide.

FIG.2A

EP 0 443 904 A1

# GRAPPIN DE LEVAGE ET DE DEPLACEMENT D'UN OBJET ENTRE UNE POSITION IMMERGEE DANS UN LIQUIDE CHAUD TEL QU'UN METAL ET UNE POSITION EMERGEE DANS UN GAZ

L'invention concerne un grappin de levage et de déplacement d'un assemblage combustible, entre une position immergée dans un metal liquide, tel que le sodium, et une position émergée dans un gaz froid, ou de tout autre objet entre une position immergée dans un métal liquide ou autre liquide chaud, tel qu'un bain de sels fondus, et une position émergée dans un gaz.

Dans le cadre de l'exploitation des réacteurs nucléaires à neutrons rapides dont le liquide de refroidissement est généralement constitué par un métal liquide tel que le sodium, il est nécessaire d'assurer des opérations de manutention sur des assemblages combustibles ou des pièces mécaniques immergées dans le métal liquide de refroidissement du réacteur contenu dans la cuve du réacteur. Il peut être nécessaire également d'effectuer des opérations de manutention sur des assemblages combustibles ou des pièces mécaniques disposés dans des capacités remplies de sodium liquide et associées à la cuve du réacteur. Ces opérations de manutention peuvent être nécessaires en particulier pour assurer le stockage d'assemblages combustibles irradiés ou le remplacement d'assemblages dans le coeur du réacteur.

Dans un réacteur, le niveau supérieur du métal liquide est surmonté par une atmosphère gazeuse généralement constituée par un gaz inerte, les métaux liquides tels que le sodium étant extrêmement réactifs et susceptibles de s'enflammer spontanément au contact de l'oxygène.

En dehors du domaine des réacteurs nucléaires utilisant un métal liquide pour leur refroidissement, il peut être nécessaire d'effectuer des manutentions alternatives entre une zone en gaz froid et une zone contenant un liquide chaud, ce qui risque de contrarier le fonctionnement du grappin.

On connaît des grappins de type mécanique comportant des doigts de préhension qui peuvent être commandés à distance pour assurer la prise ou le relâchement d'un objet tel qu'un assemblage combustible.

De tels grappins peuvent être conçus pour fonctionner alors qu'ils sont immergés dans un métal liquide tel que le sodium.

Une partie au moins des pièces constituant le grappin et en particulier les organes de préhension de ce grappin sont constamment immergés dans le sodium liquide et fonctionnent à une température supérieure à la température de solidification de ce métal liquide.

De tels grappins mécaniques peuvent bien sûr être également conçus pour être utilisés dans une atmosphère gazeuse. Ils ne sont jamais immergés.

Cependant, dans le cas d'opérations de manutention sur des objets tels que des assemblages combustibles immergés dans un métal liquide chaud, par exemple pour extraire ces objets du métal liquide et pour les évacuer dans une zone occupée par une atmosphère gazeuse à température inférieure à la température de solidification du métal liquide, il n'est pas possible d'utiliser ces grappins mécaniques, du métal liquide étant susceptible de se déposer et de se figer sur les organes mobiles du grappin, au moment où le grappin passe d'une position immergée dans le métal liquide à une position émergée dans laquelle le grappin se trouve plongé dans une atmosphère gazeuse dont la température est inférieure à la température de figeage du métal liquide. Le figeage du métal liquide sur les organes mobiles du grappin peut se traduire par un fonctionnement défectueux de ce grappin et en particulier par une impossibilité d'ouvrir les doigts du grappin et de libérer l'objet dont on assure la manutention.

Pour effectuer des opérations de manutention d'objets tels que des assemblages combustibles immergés dans un métal liquide, on utilise généralement deux grappins différents, les opérations de manutention s'effectuant en deux temps.

Un premier grappin fonctionnant uniquement à chaud, à une température supérieure à la température de figeage du métal liquide, permet d'assurer la prise de la tête de l'assemblage sous le niveau du métal liquide et le levage de la tête de l'assemblage de manière à la placer en position émergée au-dessus du niveau du métal liquide, et de lâcher la tête de l'assemblage dans une zone renfermant du gaz chaud.

On utilise alors un deuxième grappin fonctionnant uniquement sous atmosphère gazeuse chaude ou froide et donc non immergeable, pour effectuer une seconde opération de manutention qui consiste à reprendre la tête de l'assemblage qui a été précédemment sortie du métal liquide. Le second grappin effectue ensuite le levage et la manutention de l'assemblage combustible, sous atmosphère gazeuse.

Cette technique présente l'inconvénient de nécessiter l'utilisation de deux moyens de manutention différents au cours de deux phases successives de l'opération de manutention.

On connaît des grappins mécaniques constitués par un corps tubulaire relié à l'une de ses extrémités à un moyen de levage et dans lequel sont montés des moyens de préhension tels que des griffes d'accrochage, mobiles dans la direction radiale du corps tubulaire entre une position de prise et une position de relâchement de l'objet dont on assure la manutention.

Un coulisseau monté glissant dans la direction axiale du corps tubulaire et relié à des moyens de déplacement axial permet d'actionner à distance les moyens de préhension du grappin.

Un tel dispositif n'a cependant jamais été conçu de manière qu'il puisse être utilisé pour déplacer un objet entre une position immergée dans un métal liquide et une position émergée dans une atmosphère gazeuse chaude ou froide.

Le but de l'invention est donc de proposer un grappin de levage et de déplacement d'un objet entre une position immergée dans un liquide chaud tel qu'un métal fondu et une position émergée dans une atmosphère gazeuse, le grappin comportant un corps de forme tubulaire relié à un moyen de levage et un coulisseau monté glissant dans la direction axiale à l'intérieur du corps tubulaire ainsi que des moyens de préhension de l'objet montés à l'intérieur du corps tubulaire, mobiles radialement entre une position de prise et une position de relâchement de l'objet, le déplacement radial des moyens de préhension étant assuré par déplacement axial du coulisseau à l'intérieur du corps tubulaire ; ce grappin pouvant fonctionner de manière satisfaisante, au cours de phases successives dans le temps, à l'intérieur du liquide chaud et dans une atmosphère gazeuse.

Dans ce but, le corps tubulaire du grappin selon l'invention comporte une partie d'extrémité ouverte en forme de cloche à l'intérieur de laquelle le coulisseau est relié à la surface interne du corps tubulaire, sur toute sa périphérie par un organe élastique déformable dans la direction axiale et étanche aux gaz, les moyens de préhension étant disposés à l'intérieur de la partie d'extrémité en forme de cloche de l'élément tubulaire, entre l'organe élastique assurant sa fermeture et son extrémité ouverte, de manière que, lors de l'introduction de la partie inférieure du corps tubulaire dans le liquide chaud pour assurer la prise et le déplacement de l'objet, du gaz soit emprisonné à l'intérieur de la cloche et constitue une réserve dans laquelle sont plongés les moyens de préhension pendant la prise et le déplacement de l'objet sous le niveau du liquide chaud.

Afin de bien faire comprendre l'invention, on va maintenant décrire, à titre d'exemple non limitatif, en se référant aux figures jointes en annexe, un mode de réalisation d'un grappin de levage et de manutention suivant l'invention et son utilisation pour effectuer des opérations de manutention d'assemblages combustibles dans la cuve d'un réacteur nucléaire à neutrons rapides.

La figure 1 est une vue en élévation et en coupe partielle de la partie supérieure du grappin de levage et de manutention.

Les figures 2A et 2B sont des vues en coupe par un plan axial de symétrie et à plus grande échelle de la partie inférieure du grappin de levage et de manutention.

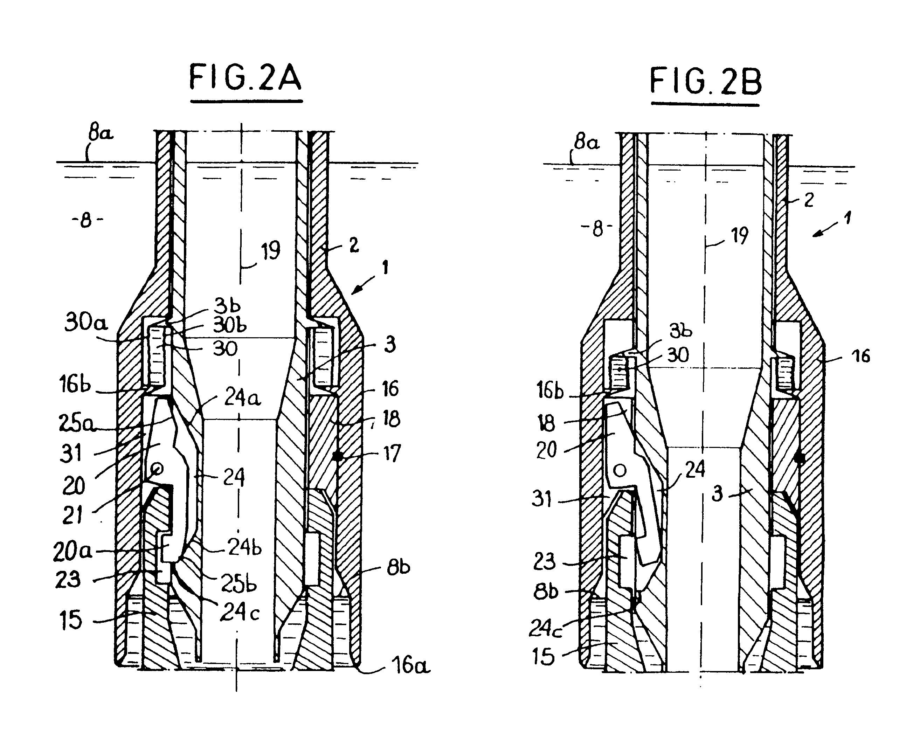

La figure 2A montre la partie inférieure du grappin en position de prise d'un assemblage combustible en position immergée dans un métal liquide.

La figure 2B montre la partie inférieure du dispositif de levage et de manutention en position de relâchement de l'assemblage combustible immergé dans le métal liquide.

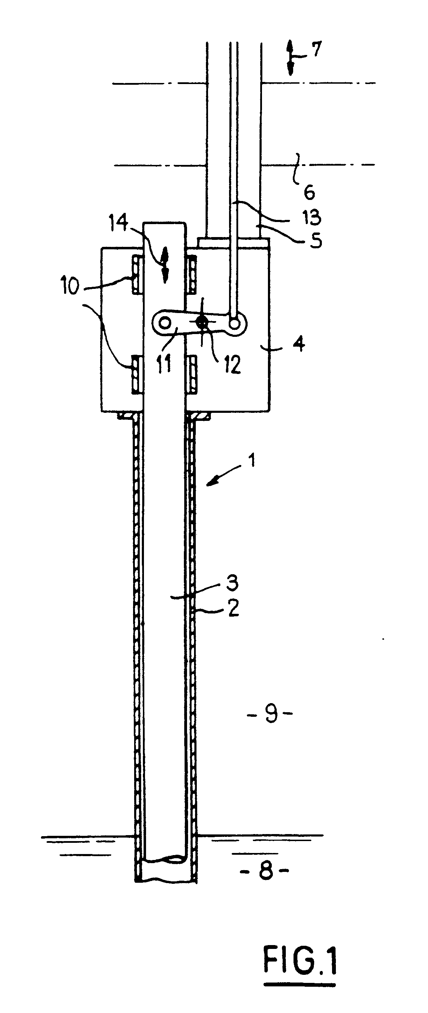

Sur la figure 1, on voit la partie supérieure du grappin de levage et de manutention désigné de manière généralement par le repère 1.

Le grappin 1 comporte principalement un corps tubulaire externe 2 et un coulisseau 3 disposé à l'intérieur du corps tubulaire 2 et suivant sa direction axiale, avec un certain jeu radial, le diamètre extérieur du coulisseau 3 étant sensiblement inférieur au diamètre intérieur du corps tubulaire 2.

Le corps tubulaire 2 est relié à sa partie supérieure à un boîtier 4 solidaire de la partie inférieure d'un mât de levage 5 de forme tubulaire qui peut être actionné pour assurer le levage ou la descente à la verticale de l'ensemble du grappin, par un dispositif tel qu'un treuil non représenté sur la figure 1 et relié à la partie supérieure du mât 5.

De préférence, le mât de levage 5 est associé à la machine de chargement du combustible du réacteur nucléaire dans lequel on utilise le grappin de levage, le mât 5 traversant un bouchon tournant 6 monté rotatif sur la dalle horizontale de fermeture de la cuve du réacteur.

Le dispositif de levage tel qu'un treuil relié à la partie supérieure du mât 5 et non représenté sur la figure 1 est monté, dans ce cas, sur le bâti de la machine de chargement du combustible. Ce dispositif permet de déplacer le mât 5 et l'ensemble du grappin de levage 1, dans la direction verticale vers le haut ou vers le bas (flèche 7).

La cuve du réacteur renferme du sodium liquide 8 surmonté par une atmosphère gazeuse 9 constituée par un gaz inerte tel que l'argon.

Le boîtier 4 ainsi que la partie supérieure du corps tubulaire 2 et du coulisseau 3 restent constamment plongés dans l'atmosphère gazeuse 9. La partie inférieure du grappin de levage 1 est introduite dans le sodium liquide 8 pour effectuer la prise et la manutention d'assemblages combustibles dans le coeur du réacteur immergés sous le niveau du sodium.

La partie d'extrémité supérieure du coulisseau 3 disposée au-dessus de l'extrémité supérieure du corps tubulaire 2 est engagée dans le boîtier 4 et montée glissante dans le boîtier 4 par l'intermédiaire de paliers 10.

La partie supérieure du coulisseau 3 est également reliée de manière articulée à deux biellettes 11 montées pivotantes par l'intermédiaire d'un axe 12 sur le carter 4. L'extrémité des biellettes 11 opposée au coulisseau 3 est reliée de manière articulée à une tige d'actionnement 13 disposée suivant l'axe du mât de levage 5. Tout autre système mécanique provoquant un mouvement relatif axial entre le coulisseau 3 et le tube 2 peut être utilisé.

La partie d'extrémité supérieure de la tige d'actionnement 13, non représentée sur la figure 1, est accessible depuis la plateforme de la machine de chargement du combustible à laquelle est reliée la partie supérieure du mât 5, pour permettre le déplacement de la tige 13 dans la direction verticale vers le haut ou vers le bas, de manière à déplacer le coulisseau 3 dans la direction verticale, comme schématisé par la flèche 14.

Sur les figures 2A et 2B, on a représenté la partie inférieure du grappin de levage et de manutention 1 immergé dans le sodium liquide 8 contenu dans la cuve du réacteur et dans une position au-dessus de la tête 15 d'un assemblage combustible du coeur du réacteur permettant la prise de cet assemblage par les moyens de préhension du grappin.

La partie inférieure du corps tubulaire 2 du grappin 1 élargie diamétralement constitue une cloche 16 ouverte à son extrémité inférieure 16a.

Une pièce annulaire de support 18 est fixée dans l'alésage intérieur de la cloche 16, par l'intermédiaire d'une clavette ou d'un jonc 17. La pièce annulaire de support 18 comporte des lumières longitudinales dans chacune desquelles est disposé un doigt d'accrochage tel que 20 monté pivotant sur un axe horizontal 21 monté transversalement dans la lumière du support 18.

De manière préférentielle, trois doigts 20 disposés à 120° les uns des autres autour de l'axe 19 du corps tubulaire 2 sont montés dans des lumières du support 18 disposées à 120° les uns des autres autour de l'axe 19 du corps tubulaire 2 et de la cloche 16.

Chacun des doigts pivotants 20 comporte une partie inférieure d'accrochage 20a qui est engagée, dans la position de prise du grappin, comme représenté sur la figure 2A, dans une gorge 23 usinée dans l'alésage intérieur de la tête d'assemblage 15.

Le coulisseau 3 est réalisé sous forme tubulaire et présente dans sa partie inférieure une zone dans laquelle la paroi de l'enveloppe tubulaire du coulisseau est sensiblement supérieure à l'épaisseur de la paroi du coulisseau dans sa partie courante.

Dans cette partie d'épaisseur accrue, sont usinées des cavités telles que 24 délimitées, à leur partie supérieure et à leur partie inférieure respectivement, par des rampes 24a et 24b inclinées par rapport à l'axe 19, dans un sens et dans l'autre.

Comme il est visible sur les figures 2A et 2B, lorsque le coulisseau 3 est engagé à l'intérieur du corps tubulaire 2, les cavités 24 viennent se placer au niveau des doigts 20 pour assurer leur manoeuvre.

Chacun des doigts 20 comporte une rampe supérieure d'actionnement 25a et une rampe inférieure 25b constituant la partie intérieure de l'extrémité d'accrochage 20a du doigt 20.

En outre, les rampes 24b des cavités 24 se terminent vers l'extérieur du coulisseau 3, par un rebord d'appui 24c sensiblement perpendiculaire à l'axe 19 commun au corps tubulaire 2 et au coulisseau 3.

Comme il est visible sur les figures 2A et 2B, le déplacement vers le bas du coulisseau 3 à l'intérieur du corps tubulaire 2, qui peut être commandé par la tige d'actionnement 13 provoque, lorsque les doigts sont dans leur position de prise comme représenté sur la figure 2A, une mise en contact des rampes 24a et 25a provoquant le basculement de la partie supérieure de chacun des doigts 20 vers l'extérieur du grappin, pour atteindre la position d'ouverture des doigts, comme représenté sur la figure 2B. La partie inférieure 20a se trouve alors dans la cavité 24 à l'extérieur de la gorge 23.

A l'inverse, le déplacement vers le haut du coulisseau 3 entraîne le déplacement vers l'intérieur de la partie supérieure des doigts 20, par interaction des rampes 24b et 25b. Les doigts 20 viennent s'engager par leur partie d'accrochage 20a à l'intérieur de la gorge 23 de la tête d'assemblage 15.

Le déplacement vers le haut du coulisseau 3 s'arrête lorsque le rebord d'appui 24c du coulisseau vient en appui sur le bord inférieur de la partie d'accrochage 20a des doigts 20. Le grappin 1 peut alors être soulevé par l'intermédiaire du mât de levage 5 et du boîtier 4 représentés sur la figure 1. La partie d'accrochage 20a des doigts 20 vient en appui sur le rebord supérieur de la gorge 23, si bien que pendant le levage le poids de l'assemblage est supporté par le coulisseau 3 sur lequel la tête d'assemblage 15 est en appui par l'intermédiaire des parties d'accrochage 20a des doigts 20.

Suivant la conception de la commande du grappin, le support de l'assemblage pendant le levage peut également être assuré, de manière redondante, par la partie inférieure 16 en forme de cloche du corps tubulaire 2, par l'intermédiaire des doigts 20 et de leurs axes d'articulation 21.

La structure et les caractéristiques de fonctionnement du mécanisme de commande du grappin 1 tel que décrites ci-dessus, se traduisant par un déplacement radial des doigts par basculement sous l'effet du déplacement axial d'un coulisseau à l'intérieur de la structure porteuse des doigts, sont bien connues de l'art antérieur, ce type de grappin pouvant être utilisé soit pour effectuer des opérations de manutention sur des assemblages plongés dans le sodium liquide, soit pour effectuer des opérations de manutention sur des assemblages disposés dans une atmosphère gazeuse à une température sensiblement inférieure à la température de solidification du métal liquide.

Cependant, les dispositifs suivant l'art antérieur ne permettent pas de réaliser le déplacement d'un objet tel qu'un assemblage combustible entre une position immergée dans un métal liquide et une position émergée dans une atmosphère gazeuse à une température inférieure à la température de solidification du métal liquide, les doigts pivotants et leur mécanisme de commande étant immergés dans le métal liquide pendant l'opération de prise de l'assemblage. Il en résulte que les doigts pivotants et le mécanisme de commande sont susceptibles de retenir du métal liquide, lors du soulèvement de l'assemblage combustible au-dessus du niveau du métal liquide, les doigts et le mécanisme de commande se trouvant alors dans une atmosphère gazeuse à une température inférieure à la température de solidification du métal liquide. La solidification du métal liquide retenu par les doigts et le mécanisme de commande risque alors d'interdire toute possibilité d'ouverture des doigts.

Selon l'invention, la partie inférieure du grappin est disposée à l'intérieur de la partie élargie 16 de l'enveloppe tubulaire 2 constituant une cloche ; la cloche 16 est fermée de manière étanche à sa partie supérieure par un élément déformable axialement assurant la jonction entre le coulisseau et la surface interne de la cloche 16.

L'élément déformable 30 est constitué par un soufflet comportant deux enveloppes coaxiales 30a et 30b présentant des ondes successives dans la direction axiale. Les parois ondulées du soufflet peuvent être constituées par exemple par un acier inoxydable.

La cloche 16 comporte, dans sa partie supérieure, une partie 16b en saillie radiale vers l'intérieur par rapport à sa surface intérieure, cette partie en saillie 16b ayant la forme d'une couronne dont la section triangulaire est visible sur les figures 2A et 2B.

Le coulisseau 3 comporte, sur sa surface externe, une partie 3b en saillie radiale vers l'extérieur ayant la forme d'une couronne dont la section triangulaire est visible sur les figures 2A et 2B. Le soufflet à double enveloppe 30 est fixé par soudage entre les couronnes 3b et 16b, les extrémités des enveloppes du soufflet 30 étant fixées de manière étanche par soudage sur les couronnes 3b et 16b.

De cette manière, l'espace annulaire 31 compris entre la surface intérieure de la cloche 16 et la surface extérieure du coulisseau 3 est fermé de manière étanche à sa partie supérieure par le soufflet 30.

Le support 18 et les doigts 20 sont fixés à l'intérieur de la cloche 16, dans l'espace annulaire 31, dans une position axiale intermédiaire entre le soufflet 30 et l'extrémité ouverte inférieure 16a de la cloche 16.

Malgré la présence d'un élément de jonction étanche entre le coulisseau 3 et le corps tubulaire 2, le coulisseau peut être déplacé axialement pour réaliser l'actionnement des doigts, comme il est visible sur les figures 2A et 2B. Lors du déplacement vers le bas du coulisseau pour réaliser l'ouverture des doigts, le soufflet 30 est comprimé comme il est visible sur la figure 2B. Le soufflet se détend par élasticité, lors du déplacement vers le haut du coulisseau 3 réalisant la fermeture des doigts comme représenté sur la figure 2A.

Le coulisseau 3 réalisé sous forme tubulaire peut être utilisé pour effectuer le soufflage d'un gaz de refroidissement à l'intérieur d'un assemblage sur lequel le grappin est en prise, lors des manutentions de l'assemblage au-dessus du niveau du métal liquide.

Pour effectuer la prise d'un assemblage sous le niveau du métal liquide, le grappin 1 est déplacé grâce au mât de levage 5 depuis une position située au-dessus du niveau du métal liquide jusqu'à la position représentée sur la figure 2B où la cloche vient coiffer la tête 15 d'un assemblage, le coulisseau 3 étant dans sa position basse et le soufflet 30 étant comprimé.

La mise en place de la cloche 16 sur la tête d'assemblage 15 est facilitée par le fait que la cloche 16 comporte une partie inférieure à diamètre élargie et que son ouverture inférieure 16a est chanfreinée vers l'intérieur.

Pendant la descente du grappin de levage dans l'atmosphère gazeuse surmontant le métal liquide, du gaz inerte tel que de l'argon remplit l'espace annulaire 31 et le volume intérieur du coulisseau tubulaire 3.

Lorsque les parties inférieures de la cloche 16 et du coulisseau 3 pénètrent sous le niveau 8a du métal liquide 8, le gaz contenu dans l'espace annulaire 31 se trouve emprisonné entre le niveau du métal liquide et le soufflet étanche 30, ce gaz ne pouvant s'échapper vers le haut.

En revanche, le gaz contenu dans le volume intérieur du coulisseau 3 peut s'échapper à l'intérieur du coulisseau qui est relié à sa partie supérieure à un dispositif d'insufflation de gaz de refroidissement.

Pendant la descente du grappin 1 dans le métal liquide, le gaz contenu dans l'espace annulaire 31 se trouve comprimé, de manière que le niveau 8b du métal liquide dans l'espace annulaire 31 reste en-dessous de la partie inférieure 20a des doigts 20 et du rebord d'appui 24c du coulisseau 3.

Les doigts de préhension 20 et leur moyen de commande restent donc constamment plongés dans une atmosphère gazeuse, pendant la mise en place du grappin sur la tête d'assemblage 15 et lors de la manoeuvre des doigts 20.

Les doigts 20 et leur mécanisme de commande ne sont donc pas susceptibles de venir en contact avec du métal liquide pouvant se figer sur les parties mobiles des doigts.

Il est bien évident que, pendant le levage de l'assemblage dans le métal liquide, les doigts 20 restent sous atmosphère gazeuse, le gaz contenu dans l'espace annulaire 31 qui subit une certaine détente ne pouvant s'échapper par la partie inférieure de la cloche 16.

L'assemblage peut donc être déplacé grâce au grappin de levage 1, entre sa position immergée et une position émergée dans l'atmosphère gazeuse située au-dessus du niveau du métal liquide, sans que cette manoeuvre s'accompagne d'un figeage de métal liquide sur les parties mobiles du grappin.

L'assemblage peut donc être déplacé et manutentionné, depuis sa position immergée, en utilisant uniquement le grappin de levage 1 qui peut fonctionner successivement dans le métal liquide et dans l'atmosphère gazeuse surmontant le métal liquide.

Lors de l'immersion du grappin 1 dans le métal liquide, le niveau du métal liquide à l'intérieur du coulisseau reste identique au niveau supérieur 8a du métal liquide dans la cuve du réacteur.

Le grappin de levage suivant l'invention permet donc de réaliser de manière simple et rapide des opérations de manutention consistant à déplacer des assemblages combustibles depuis une position immergée dans un métal liquide jusqu'à une position émergée dans laquelle l'assemblage combustible est plongé dans une atmosphère gazeuse surmontant le métal liquide.

L'invention ne se limite pas au mode de réalisation qui a été décrit.

C'est ainsi que l'organe élastique déformable peut être constitué sous une forme différente d'un soufflet à double enveloppe, comme décrit plus haut.

Les doigts du grappin et leur moyen de commande peuvent être réalisés sous une forme différente de celle qui a été décrite.

Le coulisseau peut être réalisé sous une forme différente de la forme tubulaire décrite ci-dessus qui permet l'insufflation de gaz de refroidissement dans un assemblage. Le coulisseau peut être constitué par une simple pièce pleine à la périphérie de laquelle est fixée l'une des extrémités de l'organe élastique déformable fixé à son autre extrémité sur la surface intérieure de la cloche.

Comme décrit dans le FR-A-2.431.907, le coulisseau peut être associé à un verrou à orientation variable, articulé sur ce coulisseau et dont l'orientation est modifiée en position basse du coulisseau par un doigt fixe solidaire du corps tubulaire, l'orientation donnée amenant le verrou, selon son orientation antérieure, soit à une position relâchée soit à une position verrouillée. Le câble de levage du grappin est relié au coulisseau sur lequel repose le corps tubulaire. Lorsque le corps tubulaire vient en appui sur l'objet dont on assure la manutention, le coulisseau peut se déplacer dans le corps tubulaire jusqu'à sa position basse, par gravité. Dans ce cas, l'ensemble du grappin ne comporte qu'un câble de levage assurant la manoeuvre du coulisseau et le transport du corps tubulaire et de la charge.

Le grappin suivant l'invention peut être utilisé pour effectuer toute opération de manutention d'un objet quelconque tel qu'une pièce mécanique pour assurer son déplacement entre une position immergée dans un métal liquide ou autre liquide chaud et une position émergée où l'objet est plongé au moins partiellement dans une atmosphère gazeuse.

Le grappin suivant l'invention peut être utilisé, en dehors du domaine des réacteurs nucléaires refroidis par métal liquide et par exemple dans des applications mettant en oeuvre un bain de sels fondus.

Il est bien évident que le grappin de levage peut être associé à des moyens de manutention permettant de déplacer l'objet non seulement dans la direction verticale mais également dans une ou plusieurs directions horizontales.

## Revendications

1.- Grappin de levage et de déplacement d'un objet entre une position immergée dans un liquide chaud (8) tel qu'un métal fondu et une position émergée, dans une atmosphère gazeuse (9), le grappin (1) comportant un corps (2) de forme tubulaire relié à un moyen de levage (5) et un coulisseau (3) monté glissant dans la direction axiale à l'intérieur du corps tubulaire (2) ainsi que des moyens de préhension (20) de l'objet montés à l'intérieur du corps tubulaire (2), mobiles radialement entre une position de prise et une position de relâchement de l'objet, le déplacement radial des moyens de préhension (20) étant assuré par déplacement axial du coulisseau (3) à l'intérieur du corps tubulaire (2), caractérisé par le fait que le corps tubulaire (2) comporte une partie d'extrémité (16) ouverte en forme de cloche à l'intérieur de laquelle le coulisseau (3) est relié à la surface interne du corps tubulaire (2), sur toute sa périphérie, par un organe élastique (30) déformable dans la direction axiale et étanche au gaz, les moyens de préhension (20) étant disposés à l'intérieur de la partie d'extrémité (16) en forme de cloche de l'élément tubulaire (2), entre l'organe élastique (30) assurant sa fermeture et son extrémité ouverte (16a), de manière que, lors de l'introduction de la partie inférieure du corps tubulaire (2) dans le métal liquide (8) pour assurer la prise et le déplacement de l'objet, du gaz soit emprisonné à l'intérieur de la cloche (16) et constitue une réserve dans laquelle se trouvent les moyens de préhension, pendant la prise et le déplacement de l'objet sous le niveau du métal liquide (8).

2.- Grappin suivant la revendication 1, caractérisé par le fait qu'un espace annulaire (31) est ménagé entre la surface intérieure de la cloche (16) et une partie d'extrémité du coulisseau (3) disposée à l'intérieur de la cloche (16), cet espace annulaire (31) étant délimité à l'une de ses extrémités par l'organe déformable et étanche (30) et les moyens de préhension (20) du grappin étant disposés dans l'espace annulaire (31).

3.- Grappin de levage suivant l'une quelconque des revendications 1 et 2, caractérisé par le fait que le coulisseau (3) est réalisé sous forme tubulaire, pour permettre le soufflage d'un gaz de refroidissement d'un objet, tel qu'un assemblage combustible sur lequel le grappin (1) est en prise.

4.- Grappin suivant l'une quelconque des revendications 1 à 3, caractérisé par le fait que l'organe déformable et étanche (30) est constitué par un soufflet présentant des ondes successives dans la direction axiale.

5.- Grappin suivant la revendication 4, caractérisé par le fait que le soufflet (30) comporte deux enveloppes cylindriques et coaxiales (30a, 30b).

6.- Grappin suivant l'une quelconque des revendications 1 à 5, caractérisé par le fait que l'organe déformable et étanche (30) est fixé à l'une de ses extrémités sur une partie annulaire (16b) en saillie vers l'intérieur de la surface interne de la cloche (16) et à son autre extrémité sur une partie annulaire (3b) en saillie radiale vers l'extérieur de la surface extérieure du coulisseau (3).

7.- Grappin suivant l'une quelconque des revendications 1 à 6, caractérisé par le fait que les moyens de préhension (20) sont constitués par des doigts d'accrochage montés pivotants sur un support (18) fixé à l'intérieur de la cloche (16).

8.- Grappin suivant la revendication 7, caractérisé par le fait que le coulisseau (3) comporte au moins deux rampes d'actionnement (24a) et (24b) inclinées par rapport à l'axe (19) du coulisseau (3) et du corps tubulaire (2) destinées à venir en contact avec des surfaces d'actionnement (25a, 25b) des doigts (20), pendant le déplacement axial du coulisseau (3), pour assurer le pivotement et le déplacement radial des doigts vers l'extérieur ou vers l'intérieur, de manière à assurer la prise ou le relâchement de l'objet (15).

9.- Application d'un grappin suivant l'une quelconque des revendications 1 à 8, pour la manutention d'assemblage combustibles d'un réacteur nucléaire à neutrons rapides immergés dans un métal liquide (8) tel que le sodium liquide, contenu dans la cuve du réacteur.

FIG.1

FIG.2A

FIG.2B

# EP 0 443 904 A1

<table>
<tr><th></th><th>Office européen des brevets</th><th>RAPPORT DE RECHERCHE EUROPEENNE</th><th>Numéro de la demande</th></tr>
</table>

EP 91 40 0327

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-2410866 (SAVIN ET AL.)<br>* page 5, ligne 36 - page 6, ligne 18 *<br>* page 6, lignes 28 - 33 *<br>* page 7, lignes 10 - 24 *<br>* page 7, ligne 36 - page 8, ligne 9; figures 1, 6 * | 1-4, 8-9 | G21C19/105 |
| Y | FR-A-2582438 (CEA ET EDF)<br>* page 3, ligne 14 - page 4, ligne 10 *<br>* page 8, ligne 31 - page 9, ligne 21; figure 3 * | 1-4, 8-9 | |
| A | GB-A-1009333 (UKAEA)<br>* page 2, lignes 67 - 105; figures 1-2 * | 1, 7-9 | |
| A | FR-A-1157964 (CEA)<br>* page 4, colonne de gauche, alinéas 3 - 5; figure 9 * | | |
| | | | DOMAINES TECHNIQUES RECHERCHES (Int. Cl.5) |
| | | | G21C |

Le présent rapport a été établi pour toutes les revendications

| Lieu de la recherche | Date d'achèvement de la recherche | Examinateur |
|---|---|---|
| LA HAYE | 26 AVRIL 1991 | CAPOSTAGNO E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................
& : membre de la même famille, document correspondant

EPO FORM 1503 03.82 (P0402)